# EUROPÄISCHE PATENTSCHRIFT

(11) **EP 0 754 903 B1**
(45) Veröffentlichungstag und Bekanntmachung des Hinweises auf die Patenterteilung: **09.02.2000**
(21) Anmeldenummer: 96110206.8
(22) Anmeldetag: 25.06.1996
(51) Int. Cl.: F16N 21/00, D04C 3/00

(54) **Schmiervorrichtung**
Lubrification device
Dispositif de lubrification

(30) Priorität: 21.07.1995 DE 19526744
(43) Veröffentlichungstag der Anmeldung: 22.01.1997
(73) Patentinhaber: Spirka Maschinenbau GmbH, 31061 Alfeld (Leine) (DE)
(72) Erfinder: Emmerich, Wolfgang, 53902 Bad Münstereifel (DE); Nagel, Axel, 31061 Alfeld (DE); Schomburg, Michael, 31073 Delligsen (DE)
(74) Vertreter: Eichler, Peter, Dipl.-Ing.

(56) Entgegenhaltungen:
- DE-C- 665 563
- DE-U- 9 104 315
- FR-A- 501 037

## Beschreibung

Die vorliegende Erfindung betrifft eine Schmiervorrichtung nach Oberbegriff von Anspruch 1.

Derartige Schmiervorrichtung ist beispielsweise bekannt aus DE-GM 91 04 315.

Bei dieser bekannten Schmiervorrichtung wird auf die zentrale Hohlachse ein stirnseitiges Kopfteil aufgesetzt, an welchem die Lagerung des Verteilersterns erfolgt.

In an sich bekannter Weise durchsetzt dann das Zuleitungsrohr für das Schmiermittel die Hohlachse sowie das aufgesetzte Kopfstück, durchdringt das Kopfstück radial nach außen und setzt sich dann in die Durchführungsbohrungen durch den Verteilerstern fort, um die außen am Verteilerstern liegenden Schmierstellen über entsprechende Leitungen mit Schmiermittel zu versorgen.

Der Nachteil dieser bekannten Schmiervorrichtung ist darin zu sehen, daß das Zuleitungsrohr an den Gehäusefugen zwischen Hohlachse und Kopfstück abzudichten ist. Die hierbei auftretenden relativ hohen Drücke können daher nur durch entsprechend starke Axialverspannung des Kopfstücks gegen die Hohlachse aufgefangen werden.

Dies setzt nicht nur hohe Fertigungsgenauigkeit im Bereich der gemeinsamen Trennfuge zwischen Kopfstück und Hohlachse voraus, sondern auch der Montageaufwand ist erheblich. Dennoch kann nicht ausgeschlossen werden, daß über die Gehäusetrennfuge Öl austritt und daß infolgedessen die Umwelt mit unnötigem Schmierstoffnebel belastet wird.

Es ist daher Aufgabe der Erfindung, unter Vereinfachung des Bauaufwandes die Dichtigkeit der ölführenden Kanäle im Hinblick auf Umweltbelastungen zu verbessern.

Diese Aufgabe wird bei der bekannten Schmiervorrichtung durch die kennzeichnenden Merkmale von Anspruch 1 gelöst.

Aus der Erfindung ergibt sich der Vorteil, daß unter Vermeidung unnötiger Schnittstellen in den ölführenden Kanälen sich sogar eine zwangsläufige Zentrierung des Verteilersterns bezüglich des Standrohres ergibt.

Dieser Vorteil wird dadurch erreicht, daß die Hohlachse durchgehend bis in den Lagerbereich ausgebildet ist. Von daher ist der Endbereich der Hohlachse, der eine Lagermöglichkeit für den Verteilerstern bietet, automatisch zentrisch bezüglich der Hohlachse.

Zusätzlich wird durch die unmittelbare Lagerung des Verteilersterns auf dem Standrohr der Montageaufwand verringert. Zweckmäßigerweise soll jedoch endseitig auf das Standrohr eine Lagerhülse aufgeschoben sein, welche die Wälzlager für den darauf zu lagernden Verteilerstern aufnimmt.

Um die Schmiermittelversorgung an den außenliegenden Schmierstellen des Verteilersterns zu erzielen, wird zusätzlich das Standrohr mit einer radial nach außen weisenden Förderbohrung im Bereich der Lagerstellen des Verteilersterns versehen. Die nach außen weisende Förderbohrung zeigt radial in das kommunizierende Kanalsystem und wird von dort aus zu den außen am Verteilerstern liegenden Schmierstellen geführt.

Hierdurch ergibt sich die Möglichkeit, daß die radial vom Standrohr zum Verteilerstern laufenden Kanäle seitlich daneben und in axialer Richtung abgedichtet werden können.

Der besondere Vorteil dieser Erfindung liegt jedoch darin, daß infolge der kompakten und unkomplizierten Bauweise in den innen liegenden Bereichen des kommunizierenden Kanalsystems am Verteilerstern eine Druckerhöhungseinrichtung für das Schmiermittel vorgesehen sein kann. Diese Weiterbildung bietet daher den Vorteil, daß, - wie an sich bekannt -, der notwendige Schmiermitteldruck von etwa 10 bis 15 bar an den außen liegenden Schmierstellen des Verteilersterns erreicht wird obwohl die Dichtungspartien zwischen dem Außenumfang des Standrohres und dem Innenumfang des Verteilersterns mit relativ platzsparenden und kommerziellen Simmering-Dichtungen abgedichtet werden können. Erst der Hochdruckaufbau hinter diesen kritischen Dichtungszonen ermöglicht die Verwendung einfachster Dichtungen für dauerhafte Dichtwirkung.

Bei der eingangs erwähnten Schmiervorrichtung ist diese Möglichkeit nicht gegeben. Die Schmiervorrichtung arbeitet im aufgesetzten Kopfteil bereits mit dem erforderlichen Hochdruck von 10 bis 15 bar. Daher müssen die kritischen Dichtungszonen an den relativ zueinander rotierenden Teilen: Kopfstück-Verteilerstern auch gegen diese Höchstdrücke abgedichtet sein. Die Dichtungsbereiche sind daher entsprechend raumfüllend und massiv auszuführen und mit teueren Hochdruckdichtungen zu bestücken, die zudem laufender Wartungsarbeiten bedürfen.

Diesen Nachteil vermeidet die Erfindung dadurch, daß allein aber insbesondere in Kombination mit einem durchgehenden Standrohr das Schmiermittel vor Erreichen der relativ zueinander bewegten Teile am Innendurchmesser des Verteilersterns mit dem niedrigen Speisedruck von etwa 3 bar beaufschlagt wird und erst nach Durchtritt durch die kritischen Bereiche relativ zueinander rotierender Teile der Druckerhöhungseinrichtung zugeführt wird.

Da an derartiger Flechtmaschine eine Vielzahl von Schmierstellen vorliegt, wird zusätzlich vorgeschlagen, daß die Druckerhöhungseinrichtung mit einer von der Drehzahl des Verteilersterns und der Anzahl der zu versorgenden Schmierstellen abhängigen Impulsfolge angetrieben ist.

Andererseits kann die Druckerhöhungseinrichtung auch ausschließlich druckgesteuert betrieben werden.

Bevorzugt wird für jede Schmierstelle eine derartige Druckerhöhungseinrichtung vorzusehen sein. Der Antrieb der Druckerhöhungseinrichtung kann z.B. über einen relativ dazu drehenden Nocken erfolgen, so daß jede Druckerhöhungseinrichtung beim Ansteigen auf die Nocke betätigt und beim Absteigen von der Nocke wieder gefüllt wird. Ein druckgesteuerter Betrieb bietet den Vorteil gänzlicher Verschleißfreiheit.

Weiterhin wird der Bauaufwand überraschenderweise zusätzlich dadurch verringert, daß eine Lagerhülse über das Ende des Standrohres geschoben ist, die über einen inneren Ringkanal mit der Förderbohrung im Standrohr kommuniziert, wobei der innere Ringkanal über eine Radialbohrung in der Lagerhülse nach außen zu den Schmierstellen führt.

Diese Weiterbildung der Erfindung trägt nämlich der Tatsache Rechnung, daß die Lagerhülse erheblich einfacher zu bearbeiten ist, als das gesamte Standrohr. Es lassen sich daher auf relativ kleinen Maschinen die erforderlichen Lagersitze in ausgezeichneter Präzision fertigen.

Um eine verkantungsfreie Lagerung des Verteilersterns auf dem Standrohr in einer Normalebene des Standrohres zu ermöglichen, wird darüber hinaus vorgeschlagen, den Verteilerstern beidseits der Förderbohrung in Wälzlacern anzuordnen. Da infolge dieser Weiterbildung eine statisch einfach bestimmte und auch bei rotierendem Verteilerstern eingehaltene Lagersituation besteht, lassen sich die Förderbohrung und das kommunizierende Kanalsystem durch preiswerte Simmeringkonstruktionen zuverlässig abdichten. Auch hierdurch wird unnötiger Austritt von Schmiermittelnebel vermieden. Die statisch einwandfreie zweiseitige Lagerung des Verteilersterns sorgt für geringen Verschleiß und ölnebeldichte Schmierung.

Im folgenden wird die Erfindung anhand eines Ausführungsbeispiels näher erläutert.

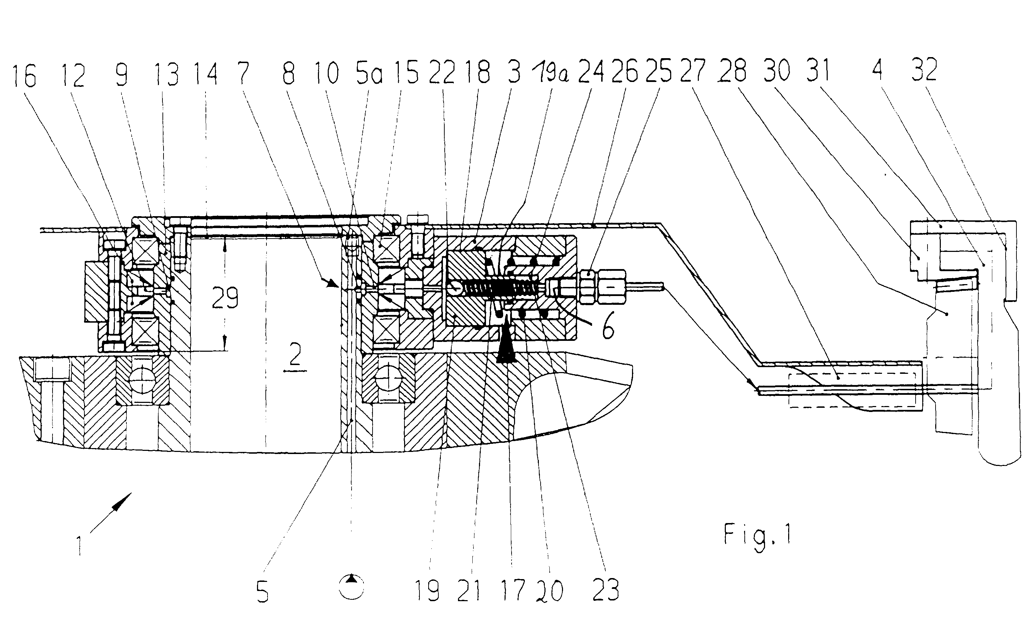

Fig.1 zeigt eine Flechtmaschine nach dieser Erfindung.

Obwohl die vorliegende Erfindung sich auf Schmiervorrichtungen allgemeiner Art bezieht, wird Sie dennoch bevorzugt an Flechtmaschinen entsprechend der nachfolgenden Beschreibung verwendet.

Derartige Flechtmaschine 1 besitzt u.a. eine Hohlachse 2. Endseitig der Hohlachse 2 ist ein Verteilerstern 3 relativ zu dieser drehbar angeordnet. Vor dem Verteilerstern ist ein weiterer Träger, der nicht näher bezeichnet ist, ebenfalls rotierend auf der Hohlachse 2 angeordnet.

Endseitig des Verteilersterns 3 sitzt der Schlittenbahnring 4, der zusammen mit dem Verteilerstern in entsprechende Drehung versetzt wird. Hierzu ist der Schlittenbahnring über Verbindungsträger 26 starr mit dem Verteilerstern verbunden. Demzufolge ist die Drehbewegung zwischen Schlittenbahnring 4 und Verteilerstern 3 synchron.

Endseitig des Verbindungsträgers 26 befindet sich eine durchbohrte Zahnradachse 27, die einerseits mit dem Verbindungsträger 26 und andererseits mit dem Schlittenbahnring 4 starr verbunden ist. Die durchbohrte Zahnradachse trägt, - in an sich bekannter Weise -, ein Planetenrad 28, welches auf der Zahnradachse drehbar gelagert ist.

Das Planetenrad 28 befindet sich umfangsmäßig im Eingriff mit einem Zahnkranz 30, welcher innenseitig am Schlitten 31 sitzt. Da sich der Schlittenbahnring 4 in einer Gleitbahn 32 des Schlittens 31 verschleißfrei bewegen muß, bedarf es an dieser Stelle einer ständigen Schmierung.

Die ständige Versorgung dieser relativ zueinander beweglichen Teile wird über eine Schmiermittelverscrgung gewährleistet, die Gegenstand dieser Anmeldung ist und im folgenden näher erläutert wird.

Um das Schmiermittel zu den Schmierstellen zu leiten, dient zunächst ein Zuleitungsrohr 5. Das Zuleitungsrohr 5 durchsetzt die Wandung der Hohlachse 2 als durchgehende Bohrung, die endseitig durch den Stopfen 5a verschlossen ist.

Über das kommunizierende Kanalsystem 7 geht das Zuleitungsrohr 5 über in die Durchführungsbohrungen 6 am Verteilerstern, von wo das Schmiermittel dann zu den einzelnen außen liegenden Schmierstellen geführt wird.

Das kommunizierende Kanalsystem 7 besteht hier aus einem Radialkanal 8, welcher von dem Zuleitungsrohr 5 ausgeht und die Wandung des Standrohres nach außen durchsetzt. Dieser Radialkanal 8 setzt sich fort in einen inneren Ringkanal 9, so daß das ankommende Schmiermittel umfangsmäßig über den gesamten Bereich der Lagerstelle verteilt wird. Hierauf wird noch eingegangen.

Ein weiterer Radialkanal 10 schließt sich dann an, der in einen äußeren Ringkanal 12 mündet. Dieser äußere Ringkanal 12 ist über ein Simmeringpaar 16 beidseitig abgedichtet. Von dort aus wird das Schmiermittel radial nach außen zu den Schmierstellen des Verteilersterns gebracht.

Wesentlich ist nun, daß die Hohlachse 2 als durchgehendes Standrohr bis in den Lagerbereich 29 des Verteilersterns ausgebildet ist. Der Verteilerstern 3 ist unmittelbar auf dem Standrohr 2 drehbar gelagert. Im vorliegenden Beispiel erfolgt die Lagerung an der zusätzlich auf das Ende des Standrohres 2 aufgeschobenen Lagerhülse 13. Das Standrohr 2 kann jedoch auch unmittelbar mit dem Lagersitz für die beiden Wälzlager 15 versehen sein, an welchem der Verteilerstern 3 gelagert ist. Das kommunizierende Kanalsystem 7 ist, wie gesagt, zwischen Verteilerstern 3 und Standrohr 2 in axialer Richtung durch das Simmeringpaar 16 abgedichtet. Bis zu dieser Stelle und noch weiter stromab ist das Schmiermittel unter relativ niedrigen Schmiermitteldruck gesetzt und wird dabei mit etwa 3 bar gefördert.

In Fließrichtung hinter dem Simmeringpaar 16 ist nun eine Druckerhöhungseinrichtung 17 angeordnet. Die Druckerhöhungseinrichtung 17 setzt das Schmiermittel in Richtung zu den außen am Verteilerstern liegenden Schmierstellen unter einen Schmiermitteldruck von etwa 10 bis 15 bar.

Die Druckerhöhungseinrichtung 17 weist einen Druckraum 18 auf, innerhalb dessen ein Kolben 19 dichtend geführt ist. Der Kolben 19 weist in Stromabwärtsrichtung einen zylindrischen Fortsatz auf, der im gegebenen Gehäuse ebenfalls dichtend geführt ist. Der Kolben 19 ist durch eine Vorhaltefeder 20 gegenüber dem Gehäuse abgestützt und wird in Richtung zum Zentrum des Standrohres 2 gedrückt.

Der Kolben ist zentral durchbohrt von der Bohrung 21. Dort sitzt ein Verschlußstück 22 unter dem Einfluß einer Schließfeder 23. Stromabwärts gesehen schließt sich eine Durchführungsbohrung 24 an, die in an sich bekannter Weise in ein Anschlußstück 25 übergeht.

Vorteilhafterweise wird die Druckerhöhungseinrichtung 17 mit einer von der Drehzahl des Verteilersterns 3 und der Anzahl der zu versorgenden Schmierstellen abhängigen Impulsfolge angetrieben. Zusätzlich ist für jede Schmierstelle eine Druckerhöhungseinrichtung 17 vorgesehen.

Der Vorteil dieser Ausbildung liegt auch darin, daß die Druckerhöhungseinrichtung zugleich die Funktion der Schmiermitteldosierung übernehmen kann. Zu diesem Zweck weist jede Druckerhöhungseinrichtung einen Druckraum 18, sowie den relativ dazu beweglichen Kolben 19 auf. Der Relativweg zwischen Kolben und Druckraum ist im Sinne einer vorgegebenen Schmiermitteldosiermenge begrenzt. Dies bedeutet, daß bei Betätigung der Druckerhöhungseinrichtung 17 jeweils nur eine vorgegebene Schmiermittelmenge ausgestoßen wird. Die Dosierung ist dabei bedarfsgerecht festgelegt.

Zur weiteren Vereinfachung des Fertigungsaufwandes erfolgt die Lagerung des Verteilersterns 3 auf der zwischengeschalteten Lagerhülse 13. Die Lagerhülse 13 ist über das Ende des Standrohres 2 geschoben und weist einen innen liegenden Ringkanal 9 auf, der mit der Radialbohrung 8 im Standrohr kommuniziert. Der innere Ringkanal setzt sich nach außen über eine Radialbohrung 10 in der Lagerhülse 13 fort und mündet außerhalb der Lagerhülse 13 in den Ringkanal 12 der beidseitig durch das Simmeringpaar 16 begrenzt wird.

Beidseits dieses Simmeringpaares 16 ist der Verteilerstern 3 in Wälzlagern 15 gelagert, um eine verkantungsfreie rotationssymmetrische Lage in einer zur Hohlachse 2 liegenden Normalebene zu gewährleisten. Jedes der beiden Wälzlager 15 ist durch den hierzu vorgeordneten Simmering 16 von dem unter Niederdruck zugeführten Schmiermittel abgeschottet.

Im folgenden wird die Funktion der Druckerhöhungseinrichtung 17 näher erläutert.

Der zentrale Kolben 19 der Druckerhöhungseinrichtung 17 ist auf seiner freien Seite von dem relativ niedrigen Förderdruck der an sich bekannten Versorgungspumpe beaufschlagt. Die Pumpe liefert beispielsweise einen Druck von 3 bar. Dieser Druck pflanzt sich über das Zuleitungsrohr 5 und das kommunizierende Kanalsystem 7 fort und steht auf der großen Durchmesserfläche des Kolbens 19 an. Die hieraus resultierende Kraft wird zunächst von der Vorhaltefeder 20 im Gleichgewicht gehalten. Folglich bewegt sich der Kolben 19 nicht. Das Verschlußstück 22, welches zentral im Kolben 19 sitzt, ist von der Schließfeder 23 belastet und ist wesentliches Element der Druckerhöhungseinrichtung 17. Die Schließfeder 23 ist so vorgespannt, daß das Verschlußstück 22 bei einem deutlich unterhalb des Lieferdrucks liegenden Druck geöffnet wird. Beispielhaft soll das Verschlußstück 22 etwa bei 0,3 bis 0,4 bar geöffnet werden. Steht also an dem Verschlußstück 22, welches hier als Kugel eines Kugelventils ausgebildet ist, ein Druck von etwa 0,4 bar an, so wird die Kugel von ihrem Sitz abgehoben und das unter höherem Druck stehende Schmiermittel kann an der Kugel vorbeiströmen um den stromabwärts liegenden Raum 24 zu füllen. Dieser Raum ist durchmesserkleiner als der Kolben 19. Beispielsweise soll das Flächenverhältnis zwischen dem Außendurchmesser des Kolbens 19 und dem Außendurchmesser des Kolbenfortsatzes 19a 1:5 betragen. Während das Schmiermittel am Kugelventil vorbeiströmt, füllt es den oberhalb des Kugelventils vorhandenen Druckraum 24 auf. Dabei findet ständiger Druckabbau statt, solange bis beidseits des Kugelventils identisches Druckpotential ansteht. In diesem Moment fließt die nach wie vor vorgespannte Schließfeder 23 das Kugelventil und die stromabwärts des Kugelventils eingeströmte Flüssigkeit ist gefangen. Nach wie vor ist der vor dem Kolben 19 anstehende Druck identisch dem Förderdruck von etwa 3 bar. Dieser Druck beaufschlagt die große Kolbenfläche. In Gegenrichtung wirkt die eingesperrte Flüssigkeit unter zunächst demselben Druck jedoch auf etwa 1/5 der Kolbenfläche, so daß der Kolben 19 infolge der resultierenden Kraft aus seiner gezeigten Nullage in Richtung zum Anschlußstück 25 verschoben wird. Hierbei baut sich in der durchmesserkleineren Kammer der Durchführungsbohrung 24 etwa der fünffache Druck auf, so daß das eingesperrte Schmiermittel über das Anschlußstück 25 zur durchbohrten Zahnradachse 27 gepreßt wird. Von dort aus gelangt das Schmiermittel über das gestrichelt gezeigte Kanalsystem an die Gleitpaarungs-Schmierstellen zwischen Schlittenbahnring 4 und Schlitten 31.

Nachdem der Kolben 19 soweit verschoben wurde, daß der Druckraum der Durchführungsbohrung 24 gänzlich entleert worden ist, fällt dort der Druck ab. Hierdurch wird das Kugelventil 22 geöffnet, da dieses von der Sitzseite her nach wie vor unter dem Druck der Fördereinrichtung steht. Das Schmiermittel kann daher an dem Verschlußstück 22 vorbeiströmen und ist bestrebt, den Raum der Durchführungsbohrung 24 erneut zu füllen. Die Druckentlastung bewirkt, daß die Vorhaltefeder 20 den Kolben 19 in seine Ausgangsstellung zurückdrückt, während gleichzeitig der obere Raum gefüllt wird.

Weiterhin ist wesentlich:
Der mit Niederdruck von ca. 3 bar beaufschlagte Raum der Druckerhöhungseinrichtung 17 ist vollständig gefüllt, wenn der Kolben seine Endstellung in Förderrichtung erreicht hat. Wird der Kolben nun infolge der Öffnung des Kugelventils 22 aus dieser Endstellung verschoben, so wird hierdurch ein Gegendruck entgegen der Förderrichtung der Pumpe aufgebaut. Es erfolgt daher sofort und ohne zeitliche Verzögerung ein erneutes Befüllen der Durchführungsbohrung 24. Insbesondere Entlüftungsprobleme treten nicht auf, da die gesamte hydraulische Säule von der Förderpumpe bis zur Schmierstelle 32 ständig unter Druck gehalten wird.

Wie aus vorheriger Beschreibung hervorgeht, ist daher die Druckerhöhungseinrichtung 17 ausschließlich druckgesteuert. Abhängig von dem Schließ- bzw. Öffnungszustand des Kugelventils 22 und abhängig von der jeweiligen Stellung des Kolbens 19 ergibt sich ein Kräftegleichgewicht am Kolben 19, das entweder zum Befüllen der Durchführungsbohrung 24 oder zum Auspressen des dort befindlichen Schmiermittels unter einem erhöhten Druck führt.

Das Maß der Druckerhöhung ist über die Flächenverhältnisse am Kolben 19 und am Kolbenfortsatz 19a vorherbestimmbar.

### Bezugszeichenaufstellung:

- 1: Flechtmaschine
- 2: Hohlachse
- 3: Verteilerstern
- 4: Schlittenbahnring
- 5: Zuleitungsrohr
- 5a: Stopfen
- 6: Durchführungsbohrung
- 7: kommunizierendes Kanalsystem
- 8: Radialkanal
- 9: innerer Ringkanal
- 10: Radialkanal
- 12: äußerer Ringkanal
- 13: Lagerhülse
- 14: Ende des Standrohres
- 15: Wälzlager
- 16: Simmeringpaar
- 17: Druckerhöhungseinrichtung
- 18: Druckraum
- 19: Kolben
- 19a: Kolbenfortsatz
- 20: Vorhaltefeder
- 21: zentrale Bohrung
- 22: Verschlußstück
- 23: Schließfeder
- 24: Durchführungsbohrung
- 25: Anschlußstück
- 26: Verbindungsträger
- 27: durchbohrte Zahnradachse
- 28: Planetenrad
- 29: Lagerbereich
- 30: Zahnkranz
- 31: Schlitten
- 32: Gleitbahn

## Patentansprüche

1. Schmiervorrichtung an gegenläufig rotierenden Maschinenteilen an einer Flechtmaschine (1), wobei die Maschinenteile eine Hohlachse (2) und einen relativ zu dieser drehbar gelagerten Verteilerstern (3) umfassen und wobei entlang der Hohlachse (2) ein Zuleitungsrohr (5) und am Verteilerstern (3) Durchführungsbohrungen (6) vorgesehen und über ein kommunizierendes Kanalsystem (7) miteinander verbunden sind, **dadurch gekennzeichnet**, daß
1.1 die Hohlachse (2) wenigstens bis in den Lagerbereich (29) des Verteilersterns (3) als durchgehendes Standrohr ausgebildet ist,
1.2 der Verteilerstern (3) auf dem Standrohr (2) drehbar gelagert ist,
1.3 das Standrohr (2) eine vom Zuleitungsrohr (5) radial nach außen weisende Förderbohrung (8) in das kommunizierende Kanalsystem (7) aufweist, welche
1.4 zwischen Verteilerstern (3) und Standrohr (2) axial abgedichtet ist.

2. Schmiervorrichtung nach Anspruch 1, **dadurch gekennzeichnet**, daß in Fließrichtung hinter dem axialen Dichtungsbereich eine in Richtung zu den Schmierstellen wirkende Druckerhöhungseinrichtung (17) für das Schmiermittel vorgesehen ist.

3. Schmiervorrichtung nach Anspruch 2, **dadurch gekennzeichnet**, daß der Schmiermitteldruck vor der Druckerhöhungseinrichtung (17) in der Größenordnung von etwa bis zu 3 bar beträgt und daß die Druckerhöhungseinrichtung (17) den Schmiermitteldruck auf 10 bis 15 bar erhöht.

4. Schmiervorrichtung nach Anspruch 3, **dadurch gekennzeichnet**, daß die Druckerhöhungseinrichtung (17) mit einer von der Drehzahl des Verteilersterns (3) und der Anzahl der zu versorgenden Schmierstellen abhängigen Impulsfolge angetrieben ist.

5. Schmiervorrichtung nach Anspruch 4, **dadurch gekennzeichnet**, daß für jede Schmierstelle eine Druckerhöhungseinrichtung (17) vorgesehen ist.

6. Schmiervorrichtung nach Anspruch 4 oder 5, **dadurch gekennzeichnet,** daß die Druckerhöhungseinrichtung (17) einen Druckraum (18) sowie einen relativ dazu beweglichen Kolben (19) enthält und daß der Relativweg zwischen Kolben und Druckraum im Sinne einer vorgegebenen Schmiermitteldosiermenge begrenzt ist.

7. Schmiervorrichtung nach einem oder mehreren der Ansprüche 1 bis 6, **dadurch gekennzeichnet**, daß die Lagerung des Verteilersterns (3) auf einer Lagerhülse (13) erfolgt, die über das Ende (14) des Standrohres (2) geschoben ist und über einen inneren Ringkanal (9) mit der Förderbohrung (8) kommuniziert, wobei der innere Ringkanal (9) über eine Radialbohrung (10) in der Lagerhülse (13) nach außen zu den Schmierstellen führt.

8. Schmiervorrichtung nach einem oder mehreren der Ansprüche 1 bis 7, **dadurch gekennzeichnet**, daß der Verteilerstern (3) beidseitig eines äußeren Ringkanals (12) in Wälzlagern (15) gelagert und daß beide Wälzlager (15) durch jeweils einen vor dem äußeren Ringkanal (12) sitzenden Simmering (16) abgeschottet sind.

## Claims

1. Lubricating device on oppositely rotating machine components on a braiding machine (1), wherein the machine components include a hollow shaft (2) and a distribution star (3) which is mounted rotatably relative to the hollow shaft, and wherein along the hollow shaft (2) there are provided a supply duct (5) and transmission bores (6) in the distribution star (3), with said duct and said bores being connected to one another by way of a communicating channel system (7), **characterised in that**
1.1 the hollow shaft (2) is formed as a continuous standpipe at least up to the bearing region (29) of the distribution star (3),
1.2 the distribution star (3) is rotatably mounted on the standpipe (2),
1.3 the standpipe (2) comprises a delivery bore (8) in the communicating channel system (7) with said delivery bore extending radially outwards from the supply duct (5),
1.4 and wherein said delivery bore is sealed off axially between distribution star (3) and standpipe (2).

2. Lubricating device according to claim 1, **characterised in that** a pressure increasing device (17) for the lubricant acting in the direction towards the lubrication points is provided after the axial sealing region in the flow direction.

3. Lubricating device according to claim 2, **characterised in that** the lubricant pressure in advance of the pressure increasing device (17) is at a magnitude of about up to 3 bar and that the pressure increasing device (17) increases the lubricant pressure to 10 to 15 bar.

4. Lubricating device according to claim 3, **characterised in that** the pressure increasing device (17) is driven by a succession of pulses dependent upon the speed of rotation of the distribution star (3) and the number of lubrication points to be supplied.

5. Lubricating device according to claim 4, **characterised in that** a pressure increasing device (17) is provided for each lubrication point.

6. Lubricating device according to claim 5, **characterised in that** the pressure increasing device (17) includes a pressure chamber (18) as well as a piston (19) which is moveable relative thereto, and that the relative displacement between piston and pressure chamber is limited in terms of a predetermined dose of lubricant.

7. Lubricating device according to one or more of claims 1 to 6, **characterised in that** the mounting of the lubricating star (3) is on a bearing sleeve (13) which is pushed over the end (14) of the standpipe (2) and communicates by way of an inner annular channel (9) with the delivery bore (8), wherein the inner annular channel (9) leads outwardly to the lubrication points by way of a radial bore (10) in the bearing sleeve (13).

8. Lubricating device according to one or more of claims 1 to 7, **characterised in that** the distribution star (3) is mounted in rolling bearings (15) on both sides of an outer annular channel (12), and that both rolling bearings (15) are partitioned by respective tuning rings (16) seating in front of the outer annular channel (12).

## Revendications

1. Dispositif de graissage sur des pièces mécaniques d'une machine de tressage (1) qui tournent en sens inverse, étant précisé que les pièces mécaniques comprennent un axe creux (2) et un distributeur en étoile (3) monté en rotation par rapport à celui-ci, et qu'un tuyau d'amenée (5) et des perçages de passage (6) sont prévus respectivement le long de l'axe creux (2) et sur le distributeur en étoile (3) et sont reliés entre eux par l'intermédiaire d'un système de conduit de communication (7), **caractérisé** en ce que
1.1 l'axe creux (2) est conçu comme un tuyau vertical continu, au moins jusque dans la zone de montage (29) du distributeur en étoile (3),
1.2 le distributeur en étoile (3) est monté en rotation sur le tuyau vertical (2),
1.3 le tuyau vertical (2) présente un perçage d'alimentation (8) qui est dirigé radialement vers l'extérieur, à partir du tuyau d'amenée (5), qui débouche dans le système de conduit de communication (7) et qui
1.4 est étanche axialement entre le distributeur en étoile (3) et le tuyau vertical (2).

2. Dispositif de graissage selon la revendication 1, **caractérisé** en ce qu'il est prévu, derrière la zone d'étanchéité axiale dans le sens d'écoulement, un dispositif d'augmentation de pression (17) pour le produit de graissage, qui agit vers les points de graissage.

3. Dispositif de graissage selon la revendication 2, **caractérisé** en ce que la pression du produit de graissage va jusqu'à 3 bar, environ, avant le dispositif d'augmentation de pression (17) et en ce que le dispositif d'augmentation de pression (17) fait passer la pression du produit de graissage à 10 à 15 bar.

4. Dispositif de graissage selon la revendication 3, **caractérisé** en ce que le dispositif d'augmentation de pression (17) est commandé avec un nombre d'impulsions qui est fonction de la vitesse de rotation du distributeur en étoile (3) et du nombre de points de graissage à alimenter.

5. Dispositif de graissage selon la revendication 4, **caractérisé** en ce qu'il est prévu pour chaque point de graissage un dispositif d'augmentation de pression (17).

6. Dispositif de graissage selon la revendication 4 ou 5, **caractérisé** en ce que le dispositif d'augmentation de pression (17) contient un espace de pression (18) et un piston (19) mobile par rapport à celui-ci, et en ce que la course relative entre le piston et l'espace de pression est limitée dans le sens d'une quantité de dosage prédéfinie du produit de graissage.

7. Dispositif de graissage selon l'une au moins des revendications 1 à 6, **caractérisé** en ce que le montage du distributeur en étoile (3) se fait sur un manchon de montage (13) qui est enfilé sur l'extrémité (14) du tuyau vertical (2) et qui communique avec le perçage d'alimentation (8) par l'intermédiaire d'un conduit annulaire intérieur (9), lequel conduit annulaire intérieur (9) mène vers l'extérieur aux points de graissage par l'intermédiaire d'un perçage radial (10) prévu dans le manchon de montage (13).

8. Dispositif selon l'une au moins des revendications 1 à 7, **caractérisé** en ce que le distributeur en étoile (3) est monté dans des paliers à roulement (15), des deux côtés d'un conduit annulaire extérieur (12), et en ce que chacun des deux paliers à roulement (15) est rendu étanche par une bague à lèvres avec ressort (16) placée devant le conduit annulaire extérieur (12).
